# FASCICULE DE BREVET EUROPEEN

(11) **EP 1 891 491 B1**
(45) Date de publication et mention de la délivrance du brevet: **13.07.2016**
(21) Numéro de dépôt: 06743601.4
(22) Date de dépôt: 27.03.2006
(51) Int. Cl.: G05B 19/4099

(54) **PROCEDE POUR LA FABRICATION PAR DECOMPOSITION EN STRATES D'UNE PIECE TRAVERSEE PAR DES CANAUX DE TRANSFERT DE FLUIDES PREVUS DANS LES INTERSTRATES**
VERFAHREN ZUR HERSTELLUNG EINES TEILS DURCH ZERLEGUNG IN SCHICHTEN, WOBEI DIESES TEIL FLÜSSIGKEITSTRANSFERKANÄLE HAT, DIE SICH DURCH DIE ZWISCHENSCHICHTEN ZIEHEN
METHOD OF PRODUCING A PART BY DECOMPOSITION INTO LAYERS, SAID PART HAVING FLUID TRANSFER CHANNELS EXTENDING THROUGH THE INTERLAYERS THEREOF

(30) Priorité: 03.06.2005 FR 0505657
(43) Date de publication de la demande: 27.02.2008
(73) Titulaire: CIRTES SRC, 88100 Saint Die des Vosges (FR)
(72) Inventeur: BARLIER, Claude, F-88100 Coinches (FR); CUNIN, Denis, F-88600 Les Poulières (FR); PELAINGRE, Cyril, F-88650 Mandray (FR)
(74) Mandataire: Rhein, Alain
(86) Numéro de dépôt international: PCT/FR2006/000661
(87) Numéro de publication internationale: WO 2006/128983

(56) Documents cités:
- WO-A-01/02160
- WO-A-2004/079463
- FR-A- 2 845 492
- US-A- 5 031 483

## Description

La présente invention concerne un procédé de fabrication d'une pièce comportant un circuit de fluide, et une pièce obtenue par le procédé.

Plus particulièrement, l'invention vise à résoudre les problèmes posés par la réalisation d'un canal assurant le transfert de fluides (liquide ou gazeux) à travers la paroi d'une pièce, c'est à dire le transfert de fluide de la cavité intérieure de la pièce vers sa surface extérieure (et inversement). Cette invention trouve des applications préférentiellement dans les moules destinés au domaine de la plasturgie (thermoformage, injection de polystyrène), de la fonderie (fonderie de sable), de la mécanique (fabrication d'outillage), de l'hydraulique (fabrication de filtres), de la verrerie, cette liste n'étant pas limitative.

En particulier, l'invention vise à remplacer et/ou améliorer, dans les outillages, l'utilisation de filtres à fentes ou de micros trous percés à la surface de l'outillage, ces micro-trous servant la plupart du temps :
- d'évents pour faciliter l'extraction assistée ou non de fluides ;
- de diffuseurs de fluides nécessaires au process de fabrication considéré.

Les problèmes de l'art antérieur sont résolus grâce à l'invention qui consiste à utiliser le procédé de Stratoconception ® pour l'appliquer à la fabrication d'une pièce et de son circuit de fluide intégré.

Le procédé Stratoconception ® est décrit dans les brevets et demandes de brevet FR 2 845 492, FR 2 673 302, WO 00/31599 et WO 00/31600.

Il fait l'objet, dans la présente demande, d'une application nouvelle qui résout les problèmes des procédés de l'art antérieur et mentionnés ci-dessus.

On comprendra mieux l'invention à l'aide de la description ci-après faite en référence aux figures annexées suivantes :
- Figure 1 : partie d'un outillage vue du côté empreinte d'une pièce à réaliser, selon un premier exemple non limitatif de mise en oeuvre de l'invention,
- Figure 2 : partie d'outillage de la figure 1, vue du côté arrière,
- Figure 3 : vue d'une portion de la partie d'outillage de la figure 1 délimité pour les besoins des explications, par deux plans (P1,P2) perpendiculaires au plan d'ouverture du moule et à la direction de stratification,
- Figures 4a et 4b : vues de définition de la composition des canaux de transfert de fluide, et de détail selon G,
- Figure 5 : vue en coupe de l'outillage des figures 4a, 4b, réalisée au niveau d'un plan interstrate (Pᵢ) et montrant une strate (6ᵢ), vue selon les flèches AA,
- Figures 6a et 6b : vues en trois dimensions de l'outillage selon l'invention réalisé avec des interstrates à surface plane, et d'un détail selon H,
- Figures 7a et 7b : vues en trois dimensions de l'outillage selon l'invention réalisé avec des interstrates à surface gauche, et d'un détail selon I,
- Figure 8 : vue de détail d'un plan interstrate (Pᵢ) montrant la construction des canaux par l'assemblage des strates (6ᵢ) et (6ᵢ₊₁)à une interstrate Pᵢ,
- Figure 9 : vue de détail d'un des canaux de transfert de fluide réalisé dans un plan interstrate Pᵢ suivant une première variante,
- Figure 10 : vue de détail d'un des canaux de transfert de fluide réalisé dans un plan interstrate Pᵢ suivant une deuxième variante,
- Figure 11 : vue en trois dimensions des canaux obtenus réalisés dans un plan interstrate Pᵢ suivant une deuxième variante,
- Figure 12 : vue de détail montrant une troisième variante de canaux de fluides prévus dans des plans interstrates Pi,
- Figure 13 : vue de détail d'un outillage réalisé suivant l'invention et muni de conduit d'alimentation ou de diffusion de section rectangulaire,
- Figure 14 : vue de détail d'un outillage réalisé suivant l'invention et muni de conduit d'alimentation ou de diffusion de section circulaire,
- Figure 15 : vue de détail d'un outillage réalisé suivant l'invention et muni de conduit d'alimentation ou de diffusion de section quelconque.
- Figures 16a, 16b, 16c : vues montrant la position de l'angle d'inclinaison (α) par rapport à l'angle (β),

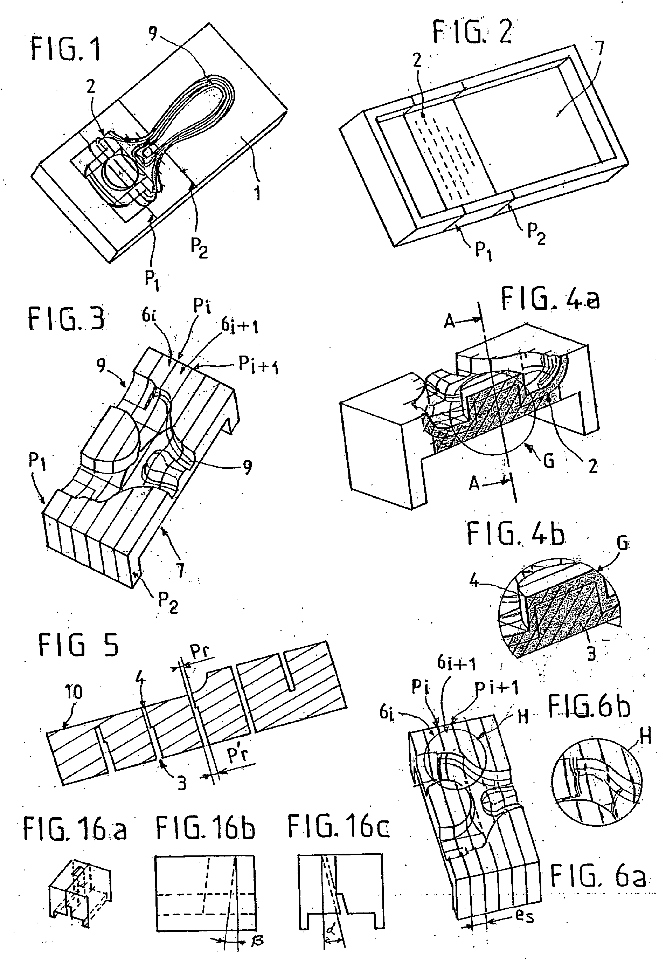

On décrit, à titre d'exemple non limitatif d'application de l'invention, la réalisation de canaux d'évacuation ou de diffusion de fluide dans une partie d'un outillage destiné à l'automobile, en liaison avec les figures 1 à 16.

L'invention peut, bien entendu, être appliquée à toute pièce autre qu'un outillage et comportant des canaux de circulation de fluide.

L'invention consiste à utiliser le procédé dit de Stratoconception ® pour réaliser, au niveau des différents plans interstrates (ces interstrates peuvent être planes ou gauches), des canaux (2) permettant de laisser passer un fluide à travers un outillage (1) et autour d'un objet lors du moulage de celui-ci (fig.1 et fig.2).

Le dit outillage est formé d'une face arrière (7) et d'une face avant constituant le plan d'ouverture de l'outillage et comportant une cavité de moulage (9) pour le moulage d'un objet non représenté. Selon ce procédé, l'outillage (1); est, pour sa conception, subdivisé en strates (...6ᵢ, 6ᵢ+_{1....}) qui, après assemblage, forment l'outillage (1) (fig.3). Au moment de la conception de l'outillage, on prévoit, au niveau de chaque interstrate, un ensemble de canaux (2) (zone hachurée fig. 4) autour de la cavité de moulage (9) (et débouchant dans celle-ci) traversant l'outillage.

Ces canaux sont ainsi fermés et débouchent à une extrémité dans la cavité moulante (9) et à l'autre extrémité sur la face arrière (7) pour permettre de laisser passer un fluide d'un côté à l'autre de l'outillage ou de la pièce.

Cet ensemble de canaux (2) est formé d'une partie alimentation (3) et d'une partie diffusion (4) reliant d'une part la cavité de moulage (9) et, d'autre part, la face arrière (7) de l'outillage (fig.4). Pour la gestion de l'écoulement des fluides, la partie alimentation (3) peut être d'une profondeur (P'r) supérieure ou égale à la profondeur (Pr) de la partie diffusion (4) (fig.5).

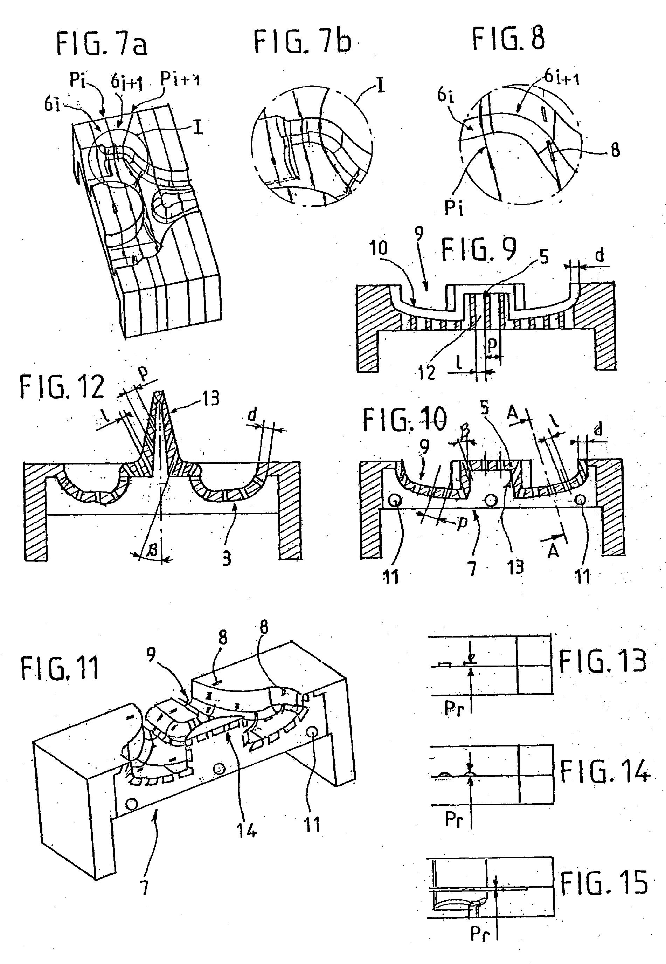

L'utilisation de la stratification dites « à surfaces gauches » permet de d'éliminer les problèmes de flipot (fig. 6) et/ou de conserver un écoulement du fluide toujours normal à la surface moulante (fig. 7)

Les canaux (2) d'un même plan interstrate (de surface plane ou gauche) (Pᵢ), réalisés, entièrement ou partiellement, dans une face d'une strate (6ᵢ), sont ouverts vers le dit plan interstrate (Pᵢ), tandis que la face en regard de la strate suivante (6_{i + 1}) (plane ou gauche) peut comporter la forme complémentaire des canaux (2) (fig. 8).

Dans un même plan d'interstrate, la séparation de la partie alimentation (3) de la partie diffusion (4) est calculée par décalage d'une valeur (d) à partir du profil (10) de la pièce (fig.9). Le dit profil est déterminé par le calcul de l'intersection de la surface de la cavité moulante (9) avec le plan interstrate (Pᵢ). Cette valeur (d) peut suivre une loi d'évolution en fonction des besoins de circulation du fluide et permet de faire évoluer le canal (2) en fonction du profil (10) de la pièce au niveau de chaque plan interstrate (Pᵢ).

L'interstrate est formée de canaux (2) (zone hachurée fig. 4) de circulation de fluide et de zones d'appui (5) entre les strates (6ᵢ) et (6ᵢ₊₁). pouvant indifféremment être situées dans la partie diffusion (fig. 9) ou dans la partie alimentation (fig.10). Dans ce cas, des zones d'appui secondaires (11) peuvent être prévues dans la partie alimentation. Ces zones d'appui secondaires permettent de garantir la précision et la rigidité de l'empilage des strates si la surface de la partie alimentation est fortement supérieure à celle de la partie diffusion (fig.10). Dans certain cas, la rigidité de l'outil peut même nécessiter d'être améliorée par la réalisation de strate à emboîtement comme définit dans le brevet FR 2 834 803 de la demanderesse.

Lorsque les zones d'appui (5) sont situées dans la partie alimentation, celle-ci est alors formée de conduits (12) dits d'alimentation. Cette configuration définit une première variante (fig. 9). Les conduits d'alimentation (12) sont parallèles entre eux et caractérisés par une largeur (l) et un pas (p) entre deux conduits d'alimentation successifs. L'écoulement du fluide est alors assuré par la partie diffusion sur tout le profil (10) de la cavité moulante (fig. 9).

De même, dans une seconde variante de configuration, la partie diffusion est munie de zones d'appuis et est formée de conduits dits de diffusion (13) (fig. 10). Les conduits de diffusion (13) peuvent alors être soit parallèles entre eux, soit normaux à la surface moulante, soit encore inclinés d'un angle (β) par rapport à la direction d'écoulement du fluide dans le canal d'alimentation (fig.10) et caractérisés par une largeur l et pas p entre deux conduits de diffusion (13) successifs. Le résultat obtenu sur l'outillage après assemblage des strates est un réseau de diffuseurs sous forme de fentes (8) réparties sur toute la surface moulante (fig.11). Vu de l'arrière, l'outillage présente une large fente au niveau de chaque plan interstrate formée par l'évidemment de la partie alimentation.

Une troisième variante de conception est également proposée (fig.12). Elle concerne la réalisation de canaux dans des pièces ou des parties de pièces élancées : leur élancement est tel que la partie diffusion d'épaisseur (d) est prépondérante. Ainsi, la partie alimentation prend la forme d'un simple conduit dans lequel aucune zone d'appuis (5) n'est intégrable. Ces zones d'appuis sont donc obligatoirement intégrées dans la partie diffusion qui est alors formée de conduits de diffusion (13) pouvant être parallèles entre eux, normaux à la surface moulante ou encore inclinés d'un angle (β) par rapport à la direction d'écoulement du fluide dans le canal d'alimentation. L'utilisation d'un angle (β) est préférée car elle permet l'optimisation et l'homogénéisation la diffusion du fluide.

La géométrie des canaux (2) (largeur (l) et pas (p) entre deux conduits (12) ou (13) successifs), ainsi que l'épaisseur constante ou évolutive des strates (eₛ) sont paramétrables en fonction du débit de fluide dont il faut assurer le passage d'une face à l'autre de l'outillage. Le pas « p » est définit comme étant l'entraxe entre deux conduits (12) dans le cas de système de conduits parallèles (fig. 9) et comme étant la longueur du segment du profil (10) séparant deux conduits (13) normaux ou deux conduits inclinés d'un angle (β) (fig. 10, fig.12).

La géométrie des conduits ((12) ou (13) ou (14)) est définie par sa profondeur (Pr) et sa section (14) selon un plan perpendiculaire au plan interstrate qui peut être droite (fig.13), en section de cercle (fig.14) ou quelconque (fig. 15).

L'angle (β) est paramétrable, il est calculé numériquement et peut évoluer tout au long de la pièce afin de permettre de minimiser les pertes de charge (principalement pour la troisième variante).

Cet angle (β) est défini dans le plan de la strate, mais il peut également être complété par un second angle (α) défini dans l'épaisseur de celle-ci (fig.16).

Tous ces paramètres permettent lors de la conception de l'outillage d'optimiser et d'homogénéiser l'écoulement du fluide sur toute la surface moulante afin d'assurer les meilleures performances à l'outillage pour qu'il puisse produire des pièces de qualité optimisée et/ou avec un temps de cycle minimum. Des outils logiciels dédiés au procédé de Stratoconception ® réalisent mathématiquement et numériquement la décomposition en strates, la création des dits canaux de transfert de fluides ainsi que l'optimisation de leurs paramètres en mettant en oeuvre un algorithme spécifique.

## Revendications

1. Procédé de fabrication d'une pièce traversée par des canaux ou conduits assurant le transfert de fluides, liquide ou gazeux, à travers de la paroi de ladite pièce, entre sa cavité intérieure et sa surface extérieure, et inversement, ladite pièce permettant la fabrication d'un moule comportant lesdits canaux pour la circulation dudit fluide depuis une partie moulante de ladite pièce, ladite partie moulante étant constituée d'une face avant constituant un plan d'ouverture de ladite pièce et comportant une cavité de moulage, vers une partie non moulante de ladite pièce, et inversement, ledit procédé étant **caractérisé en ce que** ladite pièce est conçue et fabriquée par un procédé basé sur un principe de décomposition de la pièce, par un ensemble de plans interstrates (Pᵢ), en une succession de strates (...6ᵢ, 6ᵢ₊₁) qui, après assemblage, constituent ladite pièce, et **caractérisé en ce qu'**on prévoit, au niveau des différents plans interstrates (Pᵢ) que lesdits canaux (2) aient des extrémités débouchantes, d'une part, au sein de ladite cavité de la partie moulante et, d'autre part, au niveau de la partie non moulante, permettant de laisser passer ledit fluide à travers la pièce (1).

2. Procédé selon la revendication 1, **caractérisé en ce que** les canaux d'un même plan interstrate (Pᵢ) réalisés dans une face d'une strate (6ᵢ) sont ouverts vers ledit plan interstrate (Pᵢ), tandis que la face en regard de la strate suivante (6_{i + 1}) comporte la forme complémentaire des canaux (2).

3. Procédé selon la revendication 1 ou la revendication 2, **caractérisé en ce que**, au moment de la conception de la pièce, on prévoit, au niveau de chaque interstrate, un ensemble desdits canaux (2) autour d'une cavité (9), chaque canal (2) étant formé d'une partie alimentation (3) et d'une partie diffusion (4) reliant d'une part la cavité et, d'autre part, une face arrière (7) de la pièce (1).

4. Procédé selon la revendication 3, **caractérisé en ce que**, dans un même plan d'interstrate, la séparation de la partie alimentation (3) de la partie diffusion (4) est calculée par décalage d'une valeur (d) à partir du profil (10) de la cavité, ledit profil étant déterminé par le calcul de l'intersection de la surface de la cavité (9) avec le plan interstrate (Pᵢ).

5. Procédé selon la revendication 3 ou 4, **caractérisé en ce qu'**on prévoit des zones d'appui (5) entre deux strates (6ᵢ) et (6_{i + 1}) dans la partie diffusion (4) ou dans la partie alimentation (3).

6. Procédé selon la revendication 5, **caractérisé en ce qu'**on prévoit des zones d'appui secondaire (11) dans la partie alimentation (3).

7. Procédé selon la revendication 5 ou 6, **caractérisé en ce qu'**on prévoit des strates à emboîtement.

8. Procédé selon l'une quelconque des revendications 3 à 6, **caractérisé en ce qu'**on définit la géométrie des canaux (2) ainsi que l'épaisseur des strates (eₛ) par paramétrage en fonction du débit de fluide dont il faut assurer le passage.

9. Procédé selon l'une quelconque des revendications 2 à 8, **caractérisé en ce qu'**on prévoit des conduits (12), (13), (14) soit parallèles entre eux, soit normaux à la surface de la cavité (9), soit encore inclinés d'un angle (β) par rapport à la direction d'écoulement du fluide dans le canal d'alimentation, (β) étant défini dans le plan de la strate et les conduits définis par une largeur (1) et un pas (p).

10. Procédé selon la revendication 9, **caractérisé en ce qu'**on prévoit un second angle (α) défini dans l'épaisseur de la strate.

11. Pièce (1) comportant un ensemble de canaux permettant de laisser passer un fluide à travers ladite pièce (1) et/ou autour d'une cavité (9) de celle-ci, **caractérisée en ce que** ladite pièce est conçue et fabriquée par le procédé défini à l'une quelconque des revendications 1 à 10, et **en ce que** lesdits canaux (2) sont situés au niveau des différents plans interstrates (Pᵢ), traversent la pièce et débouchent d'une part dans sa face avant sur une surface de profil (10) et, d'autre part, sur sa face arrière (7).

12. Pièce (1) selon la revendication 11, **caractérisée en ce que** les canaux réalisés dans une face d'une strate (6ᵢ), sont ouverts vers ledit plan interstrate (Pᵢ), tandis que la face en regard de la strate suivante (6_{i + 1}) comporte la forme complémentaire des canaux (2).

13. Pièce (1) selon la revendication 11 ou 12, **caractérisée en ce que** les canaux entourent le profil (10) de ladite cavité (9).

14. Pièce (1) selon la revendication 13, **caractérisée en ce que** chaque canal est formé d'une partie alimentation (3) et d'une partie diffusion (4) reliant d'une part la cavité (9), et d'autre part, la face arrière (7).

15. Pièce (1) selon la revendication 14, **caractérisée en ce qu'**elle comporte des zones d'appui (5) entre deux strates (6ᵢ) et (6_{i + 1}) dans la partie diffusion (4) ou dans la partie alimentation (3).

16. Pièce (1) selon la revendication 15, **caractérisée en ce qu'**elle comporte des appuis secondaires (11) dans la partie alimentation (3).

17. Pièce (1) selon l'une quelconque des revendications 12 à 16, **caractérisée en ce qu'**elle comporte des conduits (12), (13), (14) parallèles entre eux, ou normaux à la surface de la cavité (9) ou inclinés d'un angle (β) par rapport à la direction d'écoulement du fluide.

18. Pièce (1) selon la revendication 17, **caractérisée en ce que** les conduits (12), (13), (14) sont définis par un pas (p) et une largeur (1) et une profondeur (Pᵣ) et une section (14).

## Patentansprüche

1. Verfahren zur Herstellung eines Teils, das von des Kanälen oder Leitungen durchquert ist, die den Transfer eines flüssigen oder gasförmigen Fluids durch die Wand des Teils zwischen seinem inneren Hohlraum und seiner äußeren Oberfläche und umgekehrt sichern, wobei das Teil die Herstellung einer Form erlaubt, welche die Kanäle für die Zirkulation des Fluids von einem formenden Abschnitt des Teils, wobei der formende Abschnitt von einer Vorderseite gebildet ist, welche eine Öffnungsebene des Teils darstellt und einen Formungshohlraum aufweist, in Richtung eines nicht formenden Abschnitts des Teils und umgekehrt aufweist, wobei das Verfahren **dadurch gekennzeichnet ist, dass** das Teil in einem Verfahren gebildet und hergestellt ist, das auf einem Prinzip der Zerlegung des Teils durch eine Gruppe von Zwischenschichtebenen (Pᵢ) in eine Abfolge von Schichten (...6ᵢ, 6ᵢ₊₁) basiert, die nach Montage das Teil bilden, und **dadurch gekennzeichnet ist, dass** im Bereich der verschiedenen Zwischenschichtebenen (Pᵢ) vorgesehen ist, dass die Kanälen (2) ausmündende Enden einerseits in den Hohlraum des formenden Abschnitts und andererseits im Bereich des nicht formenden Abschnitts haben, wodurch erlaubt wird, dass das Fluid das Teil (1) durchquert.

2. Verfahren nach Anspruch 1, **dadurch gekennzeichnet, dass** die in einer Seite einer Schicht (6ᵢ) realisierten Kanäle einer selben Zwischenschichtebene (Pᵢ) in Richtung der Zwischenschichtebene (Pᵢ) offen sind, wogegen die Seite gegenüber der folgenden Schicht (6_{i + 1}) die komplementäre Form der Kanäle (2) aufweist.

3. Verfahren nach Anspruch 1 oder Anspruch 2, **dadurch gekennzeichnet, dass** im Augenblick der Bildung des Teils im Bereich jeder Zwischenschicht eine Gruppe der Kanäle (2) um einen Hohlraum (9) vorgesehen ist, wobei jeder Kanal (2) von einem Versorgungsabschnitt (3) und von einem Diffusionsabschnitt (4) gebildet ist, wodurch zum einen der Hohlraum und zum anderen eine Rückseite (7) des Teils (1) verbunden ist.

4. Verfahren nach Anspruch 3, **dadurch gekennzeichnet, dass** in einer selben Zwischenschichtebene die Trennung des Versorgungsabschnitts (3) vom Diffusionsabschnitt (4) durch Versetzen um einen Wert (d) ab dem Profil (10) des Hohlraums berechnet wird, wobei das Profil durch die Berechnung des Schnittpunkts der Oberfläche des Hohlraums (9) mit der Zwischenschichtebene (Pᵢ) bestimmt wird.

5. Verfahren nach Anspruch 3 oder 4, **dadurch gekennzeichnet, dass** Stützzonen (5) zwischen zwei Schichten (6ᵢ) und (6_{1 + 1}) im Diffusionsabschnitt (4) oder im Versorgungsabschnitt (3) vorgesehen sind.

6. Verfahren nach Anspruch 5, **dadurch gekennzeichnet, dass** sekundäre Stützzonen (11) im Versorgungsabschnitt (3) vorgesehen sind.

7. Verfahren nach Anspruch 5 oder 6, **dadurch gekennzeichnet, dass** Rastschichten vorgesehen sind.

8. Verfahren nach einem der Ansprüche 3 bis 6, **dadurch gekennzeichnet, dass** die Geometrie der Kanäle (2) sowie die Dicke der Schichten (es) durch Parametrierung in Abhängigkeit vom Durchsatz des Fluids, dessen Durchgang gesichert werden muss, definiert ist.

9. Verfahren nach einem der Ansprüche 2 bis 8, **dadurch gekennzeichnet, dass** entweder zueinander parallele oder normale auf der Oberfläche des Hohlraums (9) oder in einem Winkel (β) in Bezug zur Fließrichtung des Fluids im Versorgungskanal geneigte Leitungen (12), (13), (14) vorgesehen sind, wobei (β) in der Schichtebene definiert ist und die Leitungen durch eine Breite (1) und eine Steigung (p) definiert sind.

10. Verfahren nach Anspruch 9, **dadurch gekennzeichnet, dass** ein zweiter Winkel (α) vorgesehen ist, der in der Dicke der Schicht definiert ist.

11. Teil (1), umfassend eine Gruppe von Kanälen, die den Durchgang eines Fluids durch das Teil (1) und/oder um einen Hohlraum (9) desselben erlauben, **dadurch gekennzeichnet, dass** das Teil in dem Verfahren gebildet und hergestellt ist, das in einem der Ansprüche 1 bis 10 definiert ist, und dass sich die Kanäle (2) im Bereich der verschiedenen Zwischenschichtebenen (Pᵢ) befinden, das Teil durchqueren und zum einen auf der einen und der anderen Seite seiner Vorderseite auf einer Profiloberfläche (10) und zum anderen auf seiner Rückseite (7) ausmünden.

12. Teil (1) nach Anspruch 11, **dadurch gekennzeichnet, dass** die in einer Seite einer Schicht (6ᵢ) realisierten Kanäle in Richtung der Zwischenschichtebene (Pᵢ) offen sind, wogegen die Seite gegenüber der folgenden Schicht (6_{i + 1}) die komplementäre Form der Kanäle (2) aufweist.

13. Teil (1) nach Anspruch 11 oder 12, **dadurch gekennzeichnet, dass** die Kanälen das Profil (10) des Hohlraums (9) umgeben.

14. Teil (1) nach Anspruch 13, **dadurch gekennzeichnet, dass** jeder Kanal von einem Versorgungsabschnitt (3) und einem Diffusionsabschnitt (4) gebildet ist, wodurch zum einen der Hohlraum (9) und zum anderen die Rückseite (7) verbunden ist.

15. Teil (1) nach Anspruch 14, **dadurch gekennzeichnet, dass** es Stützzonen (5) zwischen zwei Schichten (6ᵢ) und (6_{i + 1}) im Diffusionsabschnitt (4) oder im Versorgungsabschnitt (3) aufweist.

16. Teil (1) nach Anspruch 15, **dadurch gekennzeichnet, dass** es sekundäre Abstützungen (11) im Versorgungsabschnitt (3) aufweist.

17. Teil (1) nach einem der Ansprüche 12 bis 16, **dadurch gekennzeichnet, dass** es zueinander parallele oder normale auf der Oberfläche des Hohlraums (9) oder in einem Winkel (β) in Bezug zur Fließrichtung des Fluids geneigte Leitungen (12), (13), (14) aufweist.

18. Teil (1) nach Anspruch 17, **dadurch gekennzeichnet, dass** die Leitungen (12), (13), (14) durch eine Steigung (p) und eine Breite (1) und eine Tiefe (Pᵣ) und einen Querschnitt (14) definiert sind.

## Claims

1. A method for manufacturing a part crossed through by channels or conduits transferring a liquid or gaseous fluid through the wall of said part, between its inner cavity and its outer surface, and conversely, said part allowing the manufacture of a mold including said channels for the circulation of said fluid from a molding portion of said part, said molding portion being made up of a front face constituting an opening plane of said part and including a molding cavity, toward a non-molding portion of said part, and vice versa, said method being **characterized in that** said part is designed and manufactured using a method based on a decomposition principle of the part, by a set of inter-ply planes (Pᵢ), in a series of plies (...6ᵢ, 6ᵢ₊₁) which, after assembly, make up said part, and **characterized in that** one provides, at the different inter-ply planes (Pᵢ), that said channels (2) have ends emerging, on the one hand, within said cavity of the molding portion, and on the other hand, at the non-molding portion, making it possible to allow said fluid to pass through the part (1).

2. The method according to claim 1, **characterized in that** the channels of a same inter-ply plane (Pᵢ) made in a face of a ply (6ᵢ) are open toward said inter-ply plane (Pᵢ), while the face across from the following ply (6_{i + 1}) includes the complementary shape of the channels (2).

3. The method according to claim 1 or claim 2, **characterized in that**, during the design of the part, one provides, at each inter-ply, a set of said channels (2) around a cavity (9), each channel (2) being formed by a supply portion (3) and a distribution portion (4) connecting the cavity on the one hand, and a rear face (7) of the part (1) on the other hand.

4. The method according to claim 3, **characterized in that**, in a same inter-ply plane, the separation of the supply portion (3) from the distribution portion (4) is computed by shifting by a value (d) from the profile (10) of the cavity, said profile being determined by computing the intersection of the surface of the cavity (9) with the inter-ply plane (Pᵢ).

5. The method according to claim 3 or 4, **characterized in that** bearing zones (5) are provided between two plies (6ᵢ) and (6_{i + 1}) in the diffusion portion (4) or in the supply portion (3).

6. The method according to claim 5, **characterized in that** secondary bearing zones (11) are provided in the supply portion (3).

7. The method according to claim 5 or 6, **characterized in that** nesting plies are provided.

8. The method according to any one of claims 3 to 6, **characterized in that** the geometry of the channels (2) and the thickness of the plies (eₛ) are defined by parameterization as a function of the flow rate of fluid that must be allowed to pass.

9. The method according to any one of claims 2 to 8, **characterized in that** conduits (12), (13), (14) are provided parallel to one another, either normal to the surface of the cavity (9), or inclined by an angle (β) relative to the flow direction of the fluid in the supply channel, (β) being defined in the plane of the ply and the conduits defined by a width (1) and a pitch (p).

10. The method according to claim 9, **characterized in that** a second angle (α) is provided defined in the thickness of the ply.

11. A part (1) including a set of channels making it possible to allow a fluid to cross through said part (1) and/or around a cavity (9) thereof, **characterized in that** said part is designed and manufactured via the method defined in any one of claims 1 to 10, and **in that** said channels (2) are situated at different inter-ply planes (Pᵢ), crossing through the part and emerging on the one hand in its front face on a profile surface (10), and on the other hand on its rear face (7).

12. The part (1) according to claim 11, **characterized in that** the channels made in one face of a ply (6ᵢ) are open toward said inter-ply plane (Pᵢ), while the face across from the following ply (6_{i + 1}) includes the complementary shape of the channels (2).

13. The part (1) according to claim 11 or 12, **characterized in that** the channels surround the profile (10) of said cavity (9).

14. The part (1) according to claim 13, **characterized in that** each channel is formed by a supply portion (3) and a distribution portion (4) connecting the cavity (9) on the one hand, and the rear face (7) on the other hand.

15. The part (1) according to claim 14, **characterized in that** it includes bearing zones (5) between two plies (6ᵢ) and (6_{i + 1}) in the distribution portion (4) or in the supply portion (3).

16. The part (1) according to claim 15, **characterized in that** it includes secondary supports (11) in the supply portion (3).

17. The part (1) according to any one of claims 12 to 16, **characterized in that** it includes conduits (12), (13), (14) that are parallel to one another, or normal to the surface of the cavity (9) or inclined by an angle (β) relative to the flow direction of the fluid.

18. The part (1) according to claim 17, **characterized in that** the conduits (12), (13), (14) are defined by a pitch (p) and a width (1) and a depth (Pᵣ) and a section (14).
